Europäisches Patentamt

European Patent Office

Office européen des brevets

(11) Publication number: **0 264 653**
**A2**

## EUROPEAN PATENT APPLICATION

(21) Application number: 87113987.9

(22) Date of filing: 24.09.87

(51) Int. Cl.⁴: **C08L 23/16**

(30) Priority: 11.10.86 JP 241868/86

(43) Date of publication of application:
27.04.88 Bulletin 88/17

(84) Designated Contracting States:
DE FR GB IT NL

(71) Applicant: **SUMITOMO CHEMICAL COMPANY,
LIMITED**
**15 Kitahama 5-chome Higashi-ku**
**Osaka-shi Osaka 541(JP)**

(72) Inventor: **Takao, Hiroyohi**
**7-16, Kurosunadai-3-chome**
**Chiba-shi(JP)**
Inventor: **Kuribayashi, Hideyuki**
**1353-4, Shiizu**
**Ichihara-shi(JP)**

(74) Representative: **Henkel, Feiler, Hänzel &
Partner**
**Möhlstrasse 37**
**D-8000 München 80(DE)**

(54) **Rubber composition.**

(57) A rubber composition comprising (I) at least one copolymer rubber selected from the group consisting of ethylene-propylene copolymer rubber and an ethylene-propylene-nonconjugated diene copolymer rubber and (II) a decomposition product having an intrinsic viscosity of 0.02 - 0.60 dl/g as measured in xylene at 70°C obtained by subjecting at least one copolymer rubber selected from the group consisting of ethylene-propylene copolymer rubber and an ethylene-propylene-nonconjugated diene copolymer rubber to thermal degradation at 300° - 450°C in the presence of an inert gas. This rubber composition is effectively utilized to produce vulcanized rubber products of ethylene-propylene copolymer rubber and/or ethylene-propylene-nonconjugated diene copolymer rubber.

EP 0 264 653 A2

## RUBBER COMPOSITION

The present invention relates to a rubber composition comprising (I) at least one copolymer rubber selected from the group consisting of ethylene-propylene copolymer rubber (hereinafter referred to as EPM) and an ethylene-propylene-nonconjugated diene copolymer rubber (hereinafter referred to as EPDM) and (II) a decomposition product as a softener for rubber having an intrinsic viscosity of 0.02 - 0.60 dl/g as measured in xylene at 70°C obtained by subjecting at least one copolymer rubber selected from the group consisting of EPM and EPDM to thermal degradation in the presence of an inert gas, and this rubber composition is effectively utilized to produce vulcanized rubber products of EPM and/or EPDM.

In general, the process for producing vulcanized rubber products includes compounding raw rubber with various compounding ingredients for rubber such as reinforcing agents, fillers, softeners, processing aids, vulcanizing agents, vulcanization accelerators and the like to obtain a rubber composition, molding the rubber composition and vulcanizing the same by means of heat or the like.

In order to obtain a rubber composition having an excellent moldability by this process, there has been usually used such a method that a lot of softener is compounded with the rubber to lower the viscosity, thereby improving the fluidity, though the amount of the softener may be varied depending upon the properties of the rubber and the kind and amount of the compounding ingredients.

Especially, paraffinic and naphthenic oils are used as a softener for EPM or EPDM. When these oils are used in a large amount, bleeding, that is a migration phenomenon of oil, takes place in the product, whereby the commodity value of the product is greatly reduced. On the other hand, the physical properties thereof are not always satisfactory. Therefore, a solution of the above problems has long been desired.

Thus, the object of the present invention is to provide a rubber composition having an excellent moldability from which is obtained a vulcanized rubber product having excellent physical properties and a lower tendency of causing a migration phenomenon of oil than conventional ones.

The present inventors have made extensive research on such a rubber composition to find:

(1) decomposition products obtained by thermally degrading EPM and/or EPDM at 300° - 450°C in the presence of an inert gas have unsaturations,

(2) a rubber composition comprising EPM and/or EPDM and some of the decomposition products thus obtained having a specific intrinsic viscosity as a softener therefor has in the unvulcanized state such a low viscosity, an excellent fluidity and moldability like a rubber composition containing an oil usually used as a softener, and

(3) a vulcanizate of the rubber composition comprising the decomposition product has a very small amount of a solvent-extract and excellent physical properties.

According to the present invention, there is provided a rubber composition having an excellent moldability from which is obtained a vulcanized rubber product having a low tendency of causing a migration phenomenon of oil and excellent physical properties comprising (I) at least one copolymer rubber selected from the group consisting of EPM and EPDM and (II) a decomposition product having an intrinsic viscosity of 0.02 - 0.60 dl/g as measured in xylene at 70°C obtained by subjecting at least one copolymer rubber selected from the group consisting of EPM and EPDM to thermal degradation at 300° - 450°C in the presence of an inert gas.

In the present invention, the EPM and EPDM may be those usually used in rubber industry.

The unconjugated diene, the third component of EPDM, used in the present invention may be 1,4-hexadiene, ethylidenenorbornene, dicyclopentadiene and the like, and ethylidenenorbornene is preferred.

The thermal degradation is carried out by heating the EPM and/or EPDM at 300° - 450°C in the presence of an inert gas for the time necessary for obtaining the target intrinsic viscosity. It can be carried out continuously in an extruder or the like, or batchwise in a reactor with stirring.

As the inert gas, nitrogen is usually used; however, gases such as argon, helium and the like are also available.

The temperature for the thermal degradation is 300° - 450°C, preferably 330° - 400°C. When the temperature is less than 300°C, it is nearly impossible to obtain a decomposition product having the target intrinsic viscosity of 0.02 - 0.60 dl/g since degradation reaction hardly occurs. On the contrary, when it exceeds 450°C, only a decomposition product having a too low intrinsic viscosity is obtained.

The decomposition product of EPM and/or EPDM of the present invention has unsaturations so that it may behave as a reactive softener in the rubber composition.

The intrinsic viscosity of the decomposition product used in the present invention ranges from 0.02 to 0.60 dl/g, preferably from 0.05 to 0.50 dl/g as measured in xylene at 70°C. When a decomposition product having an intrinsic viscosity of less than 0.02 d/g is used, it is unexpectable to obtain a vulcanized rubber product having excellent physical properties. On the contrary, when a decomposition product having an intrinsic viscosity of more than 0.60 dl/g is used, it is difficult to obtain a rubber composition having a desirable fluidity.

The weight ratio of the decomposition product (II) to the copolymer rubber (I) ranges from 5/100 to 60/100, preferably from 10/100 to 40/100. When the weight ratio of the decomposition product (II) to the copolymer rubber (I) is less than 5/100, the rubber composition is inferior in fluidity and moldability. On the contrary, it exceeds 60/100, physical properties of the vulcanized rubber product becomes lower.

Specific examples of compounding ingredients other than the decomposition product used in the rubber composition of the present invention are reinforcing agents, fillers, softeners, processing aids, anti-foaming agents, zinc oxide, stearic acid, vulcanizing agents, vulcanization accelerators and the like conventionally used in rubber industry for EPM and/or EPDM. The rubber composition is obtained by mixing EPM and/or EPDM and the decomposition product with the compounding ingredients by means of a kneading machine for rubber such as Banbury mixer, mixing roll or the like. Then a vulcanized rubber product is obtained by molding the rubber composition and then subjecting the molded rubber composition to vulcanization by means of a vulcanizer, hot-air, UHF-hot-air, PCM or the like or alternatively by directly subjecting the rubber composition to molding-vulcanization using a hot-press.

The rubber composition of the present invention can be suitably used to produce industrial parts and electric wire for which a high extrusion moldability and excellent physical properties are required.

The following Examples and Comparative Examples further illustrate the practice of the present invention and are not limitative of the scope of the present invention.

In the following Examples, the intrinsic viscosity is as measured in xylene at 70°C.

## Example 1

Into a 300-ml, four-necked flask equipped with a nitrogen-introducing tube, a thermometer, gas-exhausting tube and a stirrer were charged 120 g of EPDM (propylene content: 33% by weight, iodine value: 15, the third component: ethylidenenorbornene, intrinsic viscosity: 1.47 dl/g). The temperature was raised with feeding nitrogen into the flask in a flow rate of 1.2 liter/min. and then the EPDM was subjected to thermal degradation at 360°C for 2 hours with stirring.

Then the resulting decomposition product was cooled and a sample was taken out thereof and subjected to measurement of an infrared spectrum. There were observed characteristic absorptions due to double bonds at 890, 910 and 1,640 cm$^{-1}$. The intrinsic viscosity was 0.33 dl/g.

Then, the following components including the decomposition product were mixed together on a mixing roll to obtain a rubber composition:

EPDM (E502® mfd. by Sumitomo Chemical Co., Ltd.)     100 parts by weight

Decomposition product     30 parts by weight
FEF carbon (Seast SO mfd. by Tokai Carbon Co., Ltd.)     50 parts by weight
ZnO     5 parts by weight
Stearic acid     1 part by weight
Soxinol® BZ (zinc di-n-butyl dithiocarbamate) *     2 parts by weight
Soxinol® M (2-mercaptobenzothiazole) *     1 part by weight
Soxinol® TT (tetramethylthiuram disulfide) *     0.5 parts by weight
Soxinol® TRA (dipentamethylenethiuram tetrasulfide) *     0.5 part by weight
Sulfur     1.5 parts by weight

* vulcanization accelerator mfd. by Sumitomo Chemical Co., Ltd.

*As above

3

This rubber composition was vulcanized using a hot-press at 160°C for 12 minutes. Physical properties of the rubber composition and the vulcanized rubber product were evaluated to obtain the results shown in Table 1.

Example 2

The same procedure as in Example 1 was repeated, except that the thermal degradation was carried out at 360°C for 4 hours to obtain the results shown in Table 1.

Example 3

The same procedure as in Example 1 was repeated except that the EPDM was replaced by EPM (propylene content: 5.3% by weight, intrinsic viscosity: 1.89 dl/g), the thermal decomposition was effected at 350°C for 1.5 hours, and the resulting decomposition product was used in an amount of 20 parts by weight, to obtain the results shown in Table 1.

Example 4

The same procedure as in Example 3 was repeated, except that the thermal degradation was carried out at 360°C for 3 hours to obtain the results shown in Table 1.

Comparative Examples 1 and 2

The same procedure as in Example 1 or 3 was repeated, except that the decomposition product was replaced by 20 or 30 parts by weight of PW-380 (mfd. by Idemitsu Kosan Co., Ltd.), a commercially available softener oil for rubber to obtain the results shown in Table 1.

It is evident from the Examples and the Comparative Examples that the rubber composition of the present invention, before the vulcanization, has such an excellent fluidity that the Mooney viscosity thereof is nearly equal to those of Comparative Examples comprising a commercially available softener oil for rubber, and that the vulcanizate of the rubber composition of the present invention has a small amount of a toluene-extract, that is, a low tendency of causing bleed of oil and excellent physical properties.

*As above

Table 1

| | Softener | | | Mooney viscosity of Compound (ML100°C) |
|---|---|---|---|---|
| | Type of softener | Intrinsic viscosity | Amount of softener to Rubber | |
| Example 1 | Thermally Degraded EPDM | 0.33 dl/g | 30 PHR | 61 |
| Example 2 | Thermally Degraded EPDM | 0.14 | 30 | 55 |
| Comparative Example 1 | PW-380 | – | 30 | 56 |
| Example 3 | Thermally Degraded EPM | 0.39 | 20 | 73 |
| Example 4 | Thermally Degraded EPM | 0.16 | 20 | 69 |
| Comparative Example 2 | PW-380 | – | 20 | 70 |

– to be cont'd. –

0 264 653

Table 1 (Cont'd)

| Physical Properties of Vulcanized Rubber Product | | | |
|---|---|---|---|
| $T_B$ *1 (kgf/cm$^2$) | $E_B$ *2 (%) | $H_S$ *3 | Toluene-Extract *4 (%) |
| 160 | 460 | 62 | 6.4 |
| 171 | 550 | 58 | 11.5 |
| 131 | 390 | 61 | 18.0 |
| 168 | 400 | 66 | 7.2 |
| 166 | 430 | 63 | 9.2 |
| 159 | 380 | 65 | 13.5 |

*1  $T_B$: Tensile strength at break

*2  $E_B$: Elongation at break

*3  $H_S$: Hardness (JIS-A)

*4  After 2 days-dipping of sample in toluene at room temperature (weight ratio of sample to toluene: 1/99)

0 264 653

## Claims

1. A rubber composition comprising (I) at least one copolymer rubber selected from the group consisting of ethylene-propylene copolymer rubber and an ethylene-propylene-nonconjugated diene copolymer rubber and (II) a decomposition product having an intrinsic viscosity of 0.02 - 0.60 dl/g as measured in xylene at 70°C obtained by subjecting at least one copolymer rubber selected from the group consisting of ethylene-propylene copolymer rubber and an ethylene-propylene-nonconjugated diene copolymer rubber to thermal degradation at 300° - 450°C in the presence of an inert gas.

2. A rubber composition according to Claim 1, wherein the copolymer rubber (I) is ethylene-propylene copolymer rubber or an ethylene-propylene-nonconjugated diene copolymer rubber.

3. A rubber composition according to Claim 1, wherein the decomposition product (II) is obtained by subjecting ethylene-propylene copolymer rubber or an ethylene-propylene-nonconjugated diene copolymer rubber to the thermal degradation.

4. A rubber composition according to Claim 1, wherein the copolymer rubber (I) is ethylene-propylene copolymer rubber or an ethylene-propylene-nonconjugated diene copolymer rubber and the decomposition product (II) is obtained by subjecting ethylene-propylene copolymer rubber or an ethylene-propylene-nonconjugated diene copolymer rubber to the thermal degradation.

5. A rubber composition according to any of Claims 1 to 4, wherein the copolymer rubber (I) is an ethylene-propylene-nonconjugated diene copolymer rubber.

6. A rubber composition according to any of Claims 1 to 4, wherein the decomposition product (II) is obtained by subjecting an ethylene-propylene-nonconjugated diene rubber to the thermal degradation.

7. A rubber composition according to any of Claims 1 to 4, wherein the copolymer rubber (I) is an ethylene-propylene-nonconjugated diene copolymer rubber and the decomposition product (II) is obtained by subjecting an ethylene-propylene-nonconjugated diene copolymer rubber to the thermal degradation.

8. A rubber composition according to Claim 5, wherein the nonconjugated diene in the copolymer rubber (I) is selected from the group consisting of 1,4-hexadiene, ethylidenenorbornene and dicyclopentadiene.

9. A rubber composition according to Claim 6, wherein the nonconjugated diene in the decomposition product (II) is selected from the group consisting of 1,4-hexadiene, ethylidenenorbornene and dicyclopentadiene.

10. A rubber composition according to Claim 7, wherein the nonconjugated diene in the copolymer rubber (I) and the nonconjugated diene in the decomposition product (II) are independently selected from the group consisting of 1,4-hexadiene, ethylidenenorbornene and dicyclopentadiene.

11. A rubber composition according to Claim 5, wherein the nonconjugated diene in the copolymer rubber (I) is ethylidenenorbornene.

12. A rubber composition according to Claim 6, wherein the nonconjugated diene in the decomposition product (II) is ethylidenenorbornene.

13. A rubber composition according to Claim 7, wherein the nonconjugated diene in the copolymer rubber (I) and the nonconjugated diene in the decomposition product (II) are both ethylidenenorbornene.

14. A rubber composition according to any of Claims 1 to 4, wherein the thermal degradation is carried out at 330° - 400°C.

15. A rubber composition according to any of Claims 1 to 4, wherein the decomposition product (II) has an intrinsic viscosity of 0.05 - 0.50 dl/g.

16. A rubber composition according to any of Claims 1 to 4, wherein the weight ratio of the decomposition product (II) to the copolymer rubber (I) ranges from 5/100 to 60/100.

17. A rubber composition according to Claim 16, wherein the weight ratio of the decomposition product (II) to the copolymer rubber (I) ranges from 10/100 to 40/100.

18. A rubber composition according to any of Claims 1 to 4, wherein the rubber composition further comprises one or more compounding ingredients other than the decomposition product (II).

19. A vulcanized rubber product obtainable by subjecting the rubber composition according to any of Claims 1 to 4 to vulcanization.